# EUROPEAN PATENT APPLICATION

(11) **EP 4 702 863 A1**
(43) Date of publication of application: **04.03.2026**
(21) Application number: 25198105.6
(22) Date of filing: 26.08.2025
(51) Int. Cl.: A41D 13/018, B60R 21/268, F16L 25/02

(54) **PROTECTIVE APPARATUS**

(30) Priority: 30.08.2024 IT 202400019489
(71) Applicant: D-Air Lab S.r.l., 36100 Vicenza (IT)
(72) Inventor: PICCINOTTI, Alberto, 36064 Colceresa (Vicenza) (IT); PARISE, Nicola, 36064 Colceresa (Vicenza) (IT)
(74) Representative: Pozzato, Matteo

(57) **Abstract**

The present disclosure relates to a protective apparatus (100) which comprises an inflatable element (1) and a gas generator (4) connected by means of a mechanical connection device (10), wherein, if no activation signal is detected in said connection device (10), the passage of gas into said inflatable element is prevented.

## Description

The present invention relates generally to the sector of providing protection by means of an airbag, so as to protect a user from impacts due to falling or sliding, when travelling on a means of transport, such as a vehicle, preferably a two-wheeled vehicle, or any other means of transport, such as a horse or other animal, sports equipment, such as a pair of skis or a bobsleigh, or similar means of transport, or so as to protect a user when performing any activity also without transport means.

In the sector of user protection it is known to use protection devices including an inflatable element, namely airbag, which is inflated in the case of impacts by an inflation device in fluid communication with the airbag itself. Generally, the inflation device comprises a gas source, such as a cylinder containing compressed gas which may expand when coming into contact with an explosive charge. The activation modes, although being an aspect of particular importance for effective operation of the device, are essentially already known to a person skilled in the art of protection of a person from sudden impacts.

The inflation device is connected by means of wiring to an electronic unit and preferably these two elements are positioned closed to each other, in order to reduce the amount of wiring. The electronic unit is configured to control activation of the inflation device, which is in a specific position of the personal protection device, preferably having a wearable configuration, or of a garment which includes the personal protection device.

In particular, a personal protection device, which is preferably wearable, is known and, in order for inflation to be performed more quickly, it includes two gas generators for inflating the inflatable element. In order to reduce the wiring of the electronic unit, the gas generators are placed as close as possible to the electronic unit and preferably are arranged on a stable support structure. More precisely, the known inflation devices comprise a support structure which is formed by plates or other rigid mechanical components and is generally arranged in the region of the user's spinal column. This arrangement, while being advantageous from many points of view, has a number of drawbacks due mainly to the fact of having to provide a support for the three components, and this support must be placed in a suitable zone, for example in the back portion of the personal protection device, therefore resulting in a constraint with regard to positioning of the components in the device. This arrangement, moreover, is unable to ensure always satisfactory comfort for the user.

Consequently, the positioning of the electronic unit and several gas generators is often constrained by the need to provide a support and at the same time reduce the amount of wiring, as well as resulting in a limited degree of comfort for the user of the protection device. In fact, an excessive amount of wiring constitutes a drawback from a safety point of view since the electrically conductive wires should be hidden from view in order to avoid them being tensioned or damaged.

The starting point of the present disclosure is the technical problem of providing a personal protection device, which is able to satisfy all the aforementioned requirements with regard to the prior art and overcome the aforementioned drawbacks and/or achieve further advantages.

This is obtained by means of a socket connection device, a protective apparatus comprising one or more inflatable elements, a garment which includes said protective apparatus, and a method for activating said protective apparatus, in accordance with the respective independent claims. Secondary characteristics of the subject of the present disclosure are defined in the corresponding dependent claims.

In particular, the socket connection device according to the present disclosure is intended to connect at least a first inflatable element with a second inflatable element and/or with a gas generator. The socket connection device comprises:
- a connection component adapted to be connected to the first inflatable element,
- and a counter connection component adapted to be connected to the second inflatable element and/or to a gas generator.

The counter connection component is adapted to be reversibly connected with said connection component so as to define a tubular body extending between a first opening and a second opening and defining an internal cavity.

The connection component of the tubular body defines said first opening and the counter connection component of the tubular body defines said second opening.

Said first connection component comprises a first activation member intended to determine the generation of an electrical signal, and wherein the counter connection component comprises a second sensitive member intended to cooperate, or to interact, with said first activation member in order to determine the generation of said electrical signal, wherein a connection condition of said connection component and said counter connection component corresponds to a sealed closure of said first opening with respect to said second opening, an interaction between said first activation member and said second sensitive member, and a condition where an electrical signal is generated.

Basically, from the above description it can be understood that said first activation member and said second sensitive member are incorporated in the socket connection device so as to provide an on/off electrical connection depending on the connection/disconnection of said first connection component with/from said counter connection component. Such an on/off electrical connection does not require an additional detection device. Basically, when the first connection component is suitably connected with said counter connection component, the first activation member interacts with said second sensitive member so as to determine an "on" electrical connection condition, whereas, when the first connection component is not completely connected or is not properly connected with said counter connection component, the first activation member does not interact with said second sensitive member, so as to determine an "off" electrical connection condition. In this configuration, in which the electrical connection is incorporated and integrated in the socket connection device, an additional detection device is not needed in order to check the electrical connection.

Moreover, owing to the fact that it consists of a socket connection device, such a socket connection device allows the possibility for fluid to pass between one inflatable element and another one, or between an inflatable element and a gas generator, only if there is interaction between the first member and the second member.

In this way, wiring associated with the gas generator and the inflatable element may be made to pass inside the inflatable element and terminate with said first and second members, reducing the number of wires which are exposed.

The first activation member may be an electrical terminal, and the second sensitive member may be an electrical terminal intended to create a direct electrical contact with said first activation member, in a closed condition of said connection component of the tubular body and said counter component of the tubular body.

Alternatively, it may consist of a proximity sensor and therefore said first activation member may be a magnet and said second sensitive member may be a switching device which is sensitive to a magnetic field of said magnet intended to create said electrical signal in the vicinity of the said magnet.

Basically, the first activation member is located facing the second sensitive member, when said connection component of the tubular body and said counter component of the tubular body are suitably connected together. Actual detection of the connection does not occur, but instead it is the connection itself which closes the circuit.

Preferably, for the purposes of constructional simplicity, the connection component and counter connection component are configured to form a direct mechanical connection, preferably of the quick-fit type, or a male-female threaded connection.

For the purposes of safety and to ensure the interaction, the first activation member and said second sensitive member are preferably arranged at said first opening and said second opening so as to allow interaction with each other.

The present disclosure also relates to a protective apparatus which comprises a socket connection device as defined above, said first inflatable element and both or either one of said second inflatable element and said gas generator.

Preferably, the apparatus comprises the first inflatable element and wherein the connection component is fixed to said first inflatable element so as to allow gas to pass into said first inflatable element. The first inflatable element has a first gas passage. Said first passage is configured to connect the interior of said first inflatable element with a zone external thereto. The connection component is positioned at said outlet passage and attached to a first inflatable element.

Even more preferably, the second inflatable element has a respective second passage, and the second outlet passage is configured to connect the interior of said second inflatable element with a zone external thereto, wherein said counter connection component is positioned at said second passage and attached to said second inflatable element.

The second inflatable element may be understood as being a casing body which acts as a container for the gas generator, or alternatively both said first inflatable element and said second inflatable element are inflatable elements serving to protect a user.

The apparatus may, as said, include electric cables. An electric cable may be connected at least said second sensitive member.

The electric cable may be a first cable connected with said gas generator and wherein, in a closed condition of the connection component with said counter connection component, said first activation member is configured to generate an active state of the gas generator via said first cable.

The apparatus may also comprise a second cable connected to said first activation member and configured to establish an electric current connection with said first cable respectively. The second cable is preferably arranged in said first inflatable element.

Even more preferably, the apparatus may comprise a control unit configured for the activation of said gas generator. In order to reduce further the visible cables, the control unit may be housed in said first inflatable element and/or configured to send a wireless activation signal to said gas generator.

It may also be pointed out that the proposed apparatus may comprise a single inflation device which is shared, or rather operationally associated with all the one or more inflatable elements included in the apparatus. According to a preferred aspect of the apparatus, when a plurality of inflatable elements are present, there may be provided at least two inflation devices which include a respective gas generator, each associated with at least one of the protection assemblies present. Such a configuration may therefore have, included in the apparatus, at least two or more inflation devices, made in accordance with that already known in the present state of the art.

Basically, according to the present disclosure, each inflatable element can be activated by means of electronic control means which include at least one control unit or central terminal in communication, respectively, with the aforementioned inflation devices and with one or more sensors for detecting parameters indicating impacts and/or falls, such as acceleration and/or speed. Such sensors may be incorporated in the protection apparatus itself and be arranged and operate in ways which are already known. In the proposed apparatus the supply of the fluid for inflation of an inflatable element occurs by means of a socket connection device which is arranged at an opening for entry of the fluid, formed in the inflatable element itself. The socket connection device forms a channel which allows the inflation gas to pass through in a fluid-tight manner. This socket connection device includes two connection components, a first component of which is attached to the inflatable element, said components being configured in such a way as to allow a flow of electric current only when mechanical coupling together thereof has been correctly performed.

According to one aspect of the proposed apparatus, only if the flow of electric current between the two connection components is detected, may the gas pass through and, for example, the gas generator may be activated by the control unit. If no current is detected, activation of the gas generator is prevented, even if the control unit recognizes an impact and/or fall condition based on the data detected by the sensors. In other words, in a closed condition of the connection component with the counter connection component, said first activation member generates a signal indicating a state where gas passes through, and wherein in a condition of non-closure of the connection component with said counter connection component, the first activation member is unable to generate any signal indicating a state of gas passing through, namely is configured to generate a non-active state of the gas generator.

Consequently, when no flow of electric current is detected between the two connection components, an alarm signal may be sent by the control unit, which may activate suitable interface means, for example so as to reproduce an acoustic or luminous signal or display a text message. Said interface means may be incorporated in the apparatus itself, or in an electronic device external thereto, for example a smartphone connected in wireless mode (e.g. via Bluetooth) to the control unit.

According to a further aspect of the apparatus, the second of the two connection components may be fixed to an inflation device, in particular to a casing or bag which contains the gas generator. According to this configuration, the system for coupling together the first and second connection components also ensures a fluid-tight connection between the inflation device and the inflatable element. It can be understood how the system for coupling together the first and second connection components forms not only an electrical, but also a mechanical connection between the inflation device and the inflatable element. In order to obtain the formation of the electrical connection, it is sufficient to perform the mechanical connection correctly.

The system for coupling together the first and second connection components is reversible, for example it is a threaded male-female connection. Therefore the connection between the inflation device and the inflatable element is reversible. This enables the apparatus maintenance and inspection operations as well as the replacement of defective or already used components to be performed more quickly and easily. For example, the inflation device, after activation thereof, may be replaced with a new inflation device in a very simple manner.

Moreover, the presence of the aforementioned reversible connection means provides the apparatus with a modularity which allows it to be adapted to the specific intended use by simply adding or removing inflatable elements and/or inflation devices, owing to the aforementioned mechanical (and electrical) connection method.

With the apparatus thus described it is possible to implement a method which includes the following steps:
- providing said first inflatable element and both or either one of said second inflatable element and said gas generator;
- mechanically connecting said connection component with the counter connection component so as to define said socket connection device configured in such a way as to:
   - create a fluid-tight duct adapted to allow the entry of a gas at least into said first inflatable element;
   - allow the generation of a signal between the first activation member of said connection component and the second sensitive member of said counter connection component;
   - wherein gas is released only if an interaction between the first activation member of said connection component and the second sensitive member of said counter connection component is detected.

Further advantages, characteristic features and modes of use forming the subject of the present disclosure will become clear from the following detailed description of embodiments thereof, provided by way of a non-limiting example.

It is in any case clear that each embodiment forming the subject of the present disclosure may have one or more of the advantages listed above; in any case it is not required that each embodiment should have simultaneously all the advantages listed.

The following description will now make reference to the attached figures, provided by way of a non-limiting example:
- Figure 1 shows a perspective view of an embodiment of a connection device in accordance with the present disclosure, in an exploded configuration, comprising a connection component and a counter connection component;
- Figure 2 shows a top plan view of the connection component shown in Figure 1;
- Figure 3 shows a cross-sectional view of the connection component shown in Figure 2;
- Figure 4 shows a top plan view of the counter connection component shown in Figure 1;
- Figure 5 shows a cross-sectional view of the counter connection component shown in Figure 4;
- Figure 6 shows a front view of an embodiment of an apparatus in accordance with the present disclosure, configured in the manner of a vest;
- Figure 7 shows a perspective view of a further embodiment of a connection device in accordance with the present disclosure;
- Figures 8 and 9 show respectively a rear view of two different embodiments of an apparatus in accordance with the present disclosure, configured in the manner of a suit.

All the said figures may show parts not to scale and the curvatures and thicknesses may be magnified in order to improve the visibility thereof.

Analogous parts may be indicated in different figures by the same reference number. The inflatable elements or airbags included in the personal protection devices and the protective garments which include said airbags are known to the person skilled in the art and therefore are not further described in the present patent application.

The proposed protective apparatus comprises one or more inflatable elements positioned in different zones or areas of the apparatus, intended to protect corresponding different body regions of the user when the apparatus is in use. The apparatus may be configured to be worn by a user, in particular may be in the form of a vest, a jacket or a full suit. According to further variants forming the subject of the present disclosure, the protective apparatus may be associated with a garment such that it may be worn by a user. Such a combined arrangement may be reversible or permanent so as to form a single body. In both cases, pockets or seats may be provided, these being configured to house the components of the apparatus, in particular one or more inflatable elements, one or more inflation devices and/or the control unit described below, which may be attached there in a permanent or temporary manner.

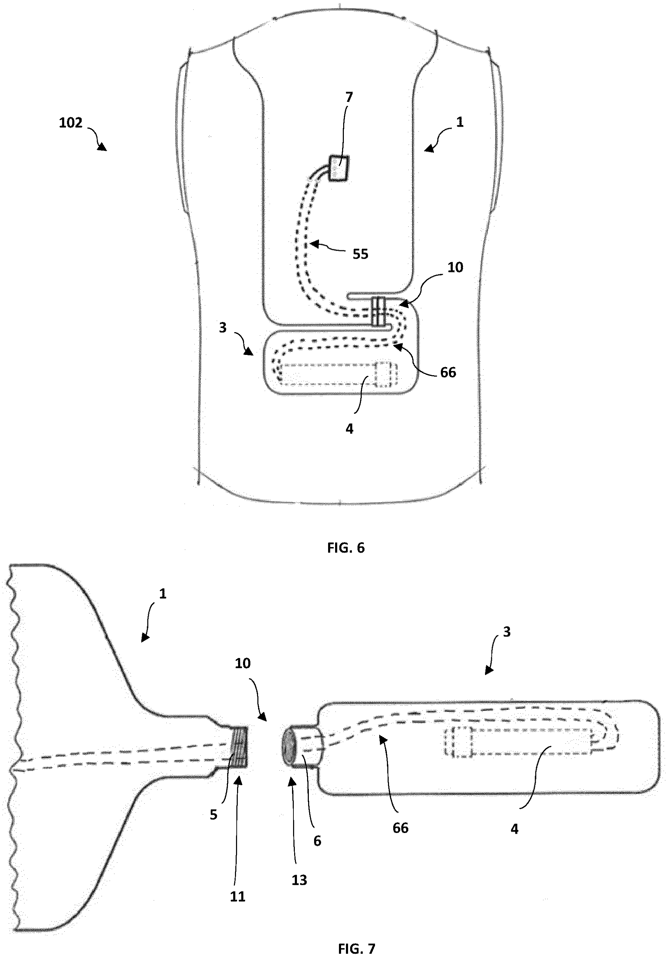

With reference to Figure 6, a preferred embodiment of the protective apparatus according to the present description is denoted by 102. The apparatus 102 comprises an inflatable element 1 configured to be able to assume a deflated condition and an inflated condition so as to protect a body region of a user when an impact or fall condition occurs. The inflatable element 1 may implement any type of airbag of the known type, where inflation is performed by means of filling with a fluid, in particular a gas.

In accordance with a preferred variant, the apparatus 102 comprises a single inflatable element 1.

The apparatus 102 further comprises a gas generator 4 for inflating the inflatable element 1, which gas generator 4 may have a configuration of the known type, in keeping with the specifications described in the present description.

The gas generator 4 may be included inside a casing 3. The casing 3 is preferably made in such a way as to be fluid-tight, so as to avoid the dispersion of gas when the gas generator 4 is activated.

The gas generator 4 is connected to a control unit 7 configured to perform activation thereof in wired mode, or alternatively wireless mode, as will be explained more fully below. The control unit 7 is programmed to perform activation of the gas generator 4 when one or more dedicated sensors detect values of parameters indicating an impact or fall condition (e.g. acceleration, speed) which are higher than predetermined threshold values, using methods which are already known in the present state of the art and will not be further described.

With reference to the example shown in Figure 7, the inflatable element 1 has an inlet passage 11 for the gas released by the gas generator 4. The inlet passage 11 is configured to connect the interior of the inflatable element 1 with a zone external thereto. Said external zone may be a further inflatable element, a bag, a casing, a chamber, but also the space inside a duct configured to allow a fluid to pass through.

At this inlet passage 11 a connection component 5 is fixed to the inflatable element 1. According to a preferred aspect, the connection component 5 is connected in a permanent manner to the inflatable element 1, so as to form a fluid-tight joint, or is made as one piece with the inflatable element.

The connection component 5 is configured to be coupled, or better mechanically connected, together with a respective counter connection component 6 in a reversible manner. The counter connection component 6 is electrically connected to the gas generator 4, as will be described in detail below.

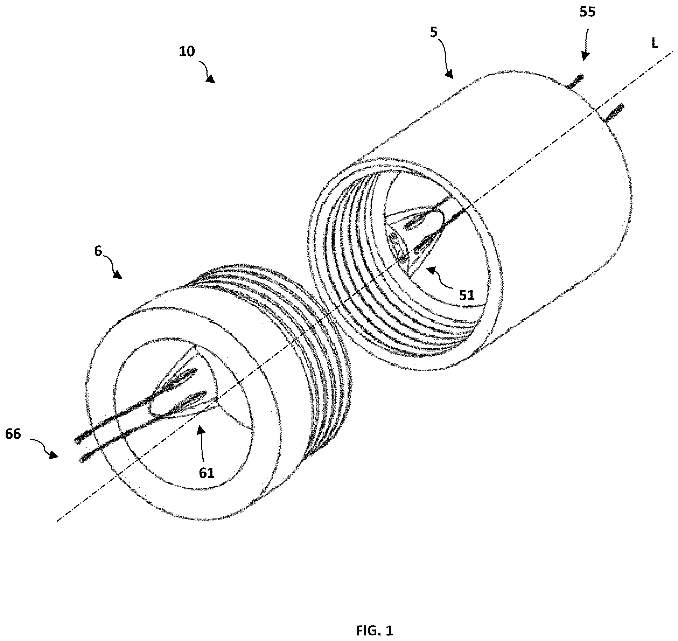

With reference to Figure 1, the connection component 5 and the counter connection component 6 both have a main body which has an opening for the passage of the fluid released by the gas generator 4, for example a through-hole which extends from one end to the other of said main body, in a longitudinal direction of extension L. A socket-like connection device 10 is obtained.

The connection component 5 and the counter connection component 6 are preferably configured to form a direct mechanical connection, namely a connection which does not require additional components to be applied to or, arranged in an intermediate position between, the connection component 5 and the counter connection component 6. According to a preferred aspect, said components may be configured to realize a connection of the quick-fit type or a threaded male-female connection.

The connection component 5 is adapted to be reversibly connected with the counter connection component 6 so as to define the aforementioned connection device 10. The socket connection device 10 is in turn configured to form a fluid-tight duct for allowing the entry inside the inflatable element 1 of a gas which is released by the gas generator 4 at the counter connection component 6. The duct has preferably a rectilinear extension along the longitudinal direction L, which coincides with the direction of extension of the connection component 5 and the counter connection component 6.

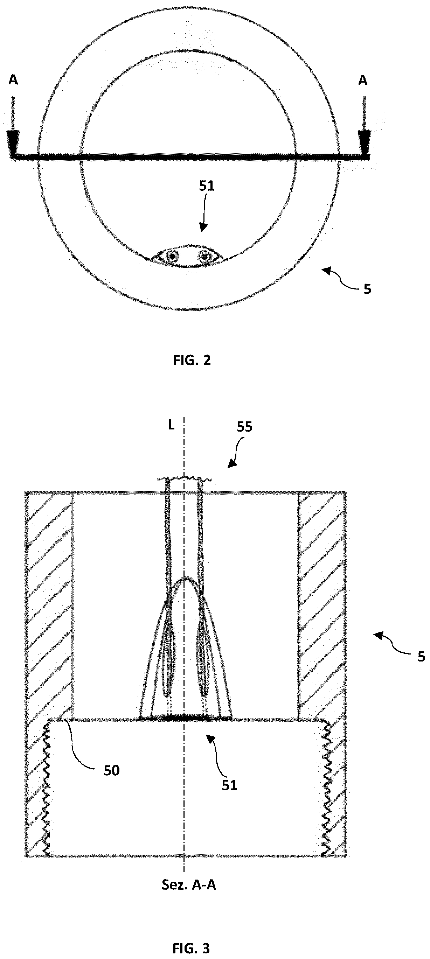

In accordance with this arrangement, the connection component 5 and the counter connection component 6 have a tubular or sleeve-like configuration, so as to form a fluid-tight duct with a circular - preferably constant - cross-section. In the example of embodiment shown in Figure 1 and in the following Figures 2 to 4, the connection component 5 and the counter connection component 6 have this configuration and are respectively configured as a female component and a male component, which are designed to form a threaded connection.

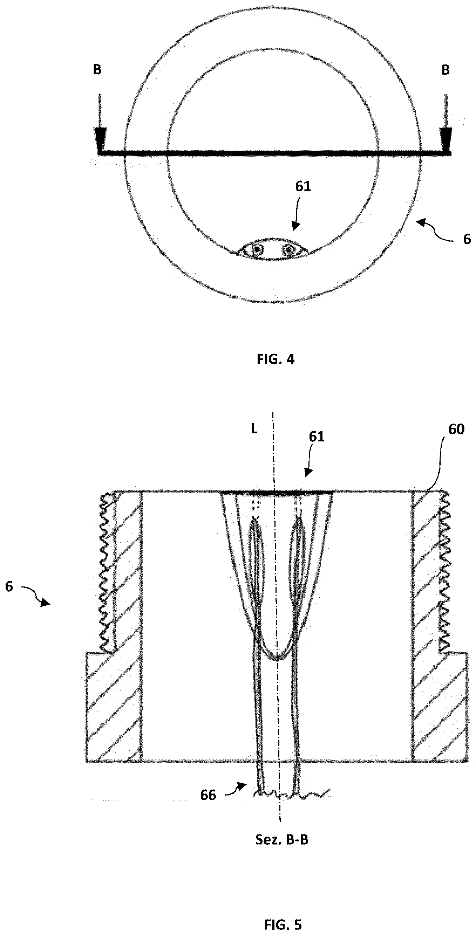

According to a preferred aspect, the connection component 5 has an internal (female) thread at least in a longitudinal terminal end portion intended to realize the mechanical coupling with the counter connection component 6, as can be seen in Figure 3. The latter has in turn a corresponding external thread (screw) at least in a longitudinal terminal end portion intended to realize the mechanical coupling with the connection component 5, as can seen in Figure 5.

In the proposed apparatus, a first activation member, in the case in question for example a terminal portion 51 of the connection component 5 and a second sensitive member, in the case in question for example a counter terminal portion 61 of the counter connection component 6, are configured to allow the flow of electric current when the connection device 10 is formed. The counter terminal portion 61 is electrically connected to the gas generator 4 in the manner which will be discussed below.

More specifically, the flow of electric current between the terminal portions 51, 61 is possible only when the mechanical coupling together of the connection component 5 and the counter connection component 6 has been correctly performed. In particular, for this purpose, the terminal portion 51 and the counter terminal portion 61 are made of electrically conductive material. The remaining parts of the connection component 5 and the counter connection component 6 are made of electrically non-conductive material, for example plastic material.

When the connection component 5 and the counter connection component 6 are mechanically connected together, the terminal portion 51 and the counter terminal portion 61 preferably make direct contact with each other.

According to a preferred aspect, shown in Figures 1 to 5, the terminal portion 51 and the counter terminal portion 61 may be each arranged in the space inside the through-hole of the respective connection component 5 and counter connection component 6.

Preferably, the terminal portion 51 and the counter terminal portion 61 protrude from an inner side surface of the aforementioned through-hole, with the protruding part comprising a shaped surface, which may also be a flat surface. The configuration is such that, when the connection component 5 and the counter connection component 6 are correctly connected together mechanically in order to form the fluid-tight duct, the terminal portion 51 and the counter terminal portion 61 are arranged inside said duct and make bearing contact with each other, in particular with their shaped surfaces, so as to form an electrical connection.

According to the present description, only when a flow of electric current between the terminal portion 51 and the counter terminal portion 61 is detected, may the gas generator 4 be activated in order to release the gas and cause the inflation of the inflatable element 1. Said condition necessary for activation may be detected by the control unit 7 - or alternatively but also in addition, so that the redundancy ensures greater reliability for the proposed solution - by dedicated means which are included in the gas generator 4.

According to a further preferred aspect, the electrical connection between the counter connection component 6, more particularly the counter terminal portion 51, and the gas generator 4 is realized by means of a first cable 66. The connection component 5 may also comprise a second cable 55 configured to establish an electric current connection with the terminal portion 51 and with the control unit 7, respectively.

In the context of the present description, the term "cable" is understood as meaning not only a single electrical cable, but also a plurality of cables and/or a plurality of electrical connections, arranged so that their free electrically conductive terminal ends are located in the counter terminal portion 61 and/or the terminal portion 51. Therefore, reference may be made equally well to electrical connection "cable" or "cables".

The counter terminal portion 61, as well as the terminal portion 51, incorporates an electric terminal and may consist of a free terminal end of the cable 66, 65. The cable 55, 56 is preferably connected in a permanently rigid manner to the respective connection component 5 or counter connection component 6, for example it may be "embedded" in said components when they are made of plastic material.

Alternatively, the terminal portion 51 and the counter terminal portion 61 may be replaced by a magnet which acts as an activator and a sensitive device such as a switch which is sensitive to a magnetic field, such as a Hall sensor or a so-called reed switch. When the magnet is moved close to the sensor, the generator may be placed in an active state, or gas may then be transferred between two inflatable elements connected together.

In accordance with the above description, the connection between the two connection components 5, 6 is established owing to the solution which incorporates the "plastic" (mechanical) part for connection with the "electrical"/proximity sensor part; an additional detection device is therefore not necessary. The "closed circuit" state (flow of electric current) is also ensured only when the mechanical engagement between the two connection components 5, 6 is performed. The establishment of the electrical connection therefore involves carrying out an operation involving little risk for the user since the connection components 5, 6 to be handled in order to couple them mechanically together, and therefore connect together electrically the respective electric terminals, are made of non-conductive (plastic) material.

According to a preferred aspect, the proposed apparatus comprises a casing 3 which houses the gas generator 4, acting as a container therefor. The casing 3 is a fluid-tight bag which comprises an outlet passage 13 for the gas released by the gas generator 4. The outlet passage 13 is configured to connect the interior of the casing 3 with a zone external thereto. Said external zone may be a further inflatable element, a bag, a casing, a chamber, but also the space inside a duct configured to allow a fluid to pass through.

There may be only one outlet passage 13 and the casing 3 may not have further outlets for exchanging fluid with the outside. According to this variant, shown in Figures 6 to 9, the counter connection component 6 is positioned at the outlet passage 13. The counter connection component 6 may be fixed to casing 3 using methods already described for the fixing of the connection component 5 to the inflatable element 1. According to this configuration, the (sole) connection between the casing 3 containing the gas generator 4 and the inflatable element 1 is performed by means of the connection device 10.

According to further variants, the casing 3 may comprise a plurality of outlet passages so as to allow the (simultaneous) supplying of fluid to a plurality of inflatable elements of the type already described.

According to the present description, the casing 3 may be configured so that it is able to assume a deflated condition and an inflated condition. Preferably, the casing 3 may be adapted to incorporate airbag technology and in fact be configured as an inflatable element containing its own gas generator 4.

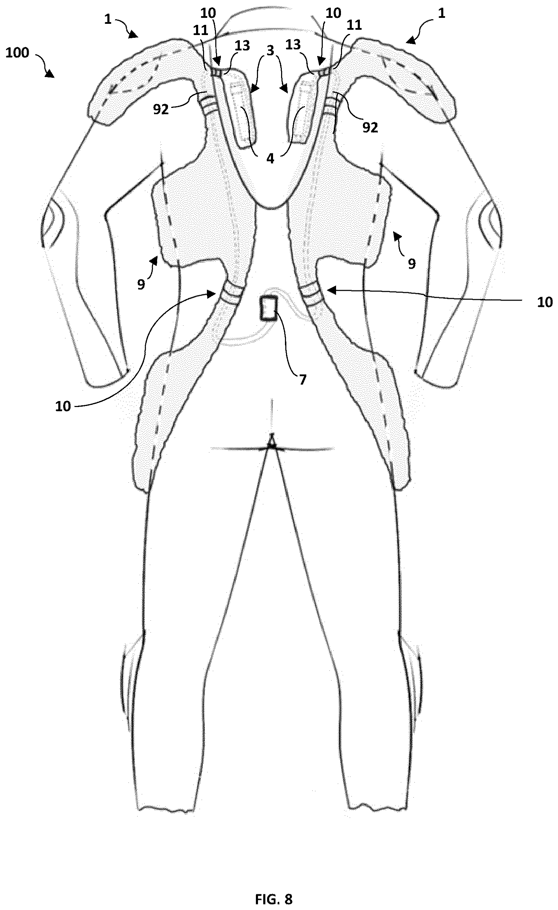

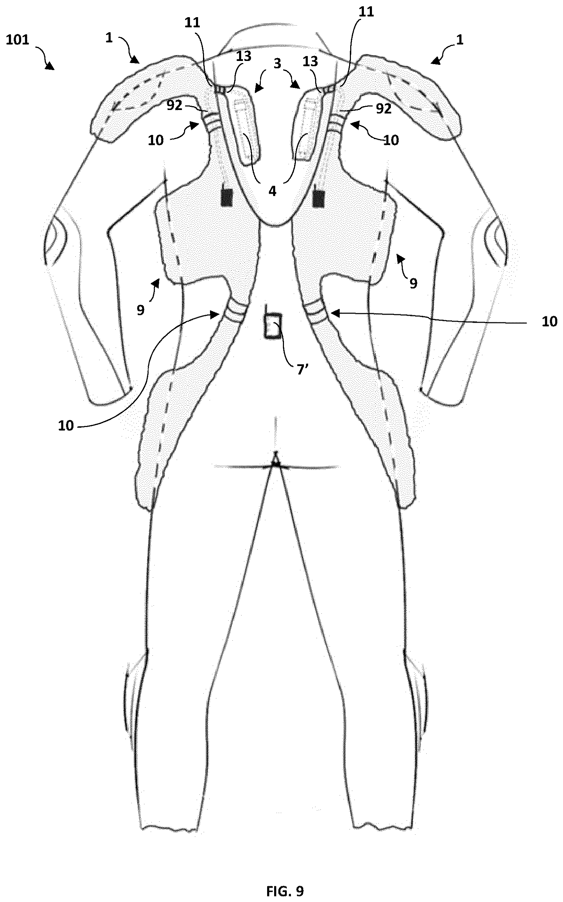

According to preferred aspects of the invention shown in Figures 8 and 9, the inflatable element 1 has furthermore at least one respective outlet passage 92. The outlet passage 92 is configured to connect the interior of the first inflatable element 1 with a zone external thereto. Said external zone may be a further inflatable element, a bag, a casing, a chamber, but also the space inside a duct configured to allow the passage of a fluid.

The outlet passage 92 is adapted to allow the propagation of the gas supplied by the gas generator 4 towards a further inflatable element 9 connected to the inflatable element 1 at the same outlet passage 92.

For this purpose, a further counter connection component 6, in accordance with that already described, is positioned at the second outlet passage 92 and fixed to the first inflatable element 1. In turn, the further inflatable element 9 must include a respective gas inlet duct, provided with a respective connection component 5 in the manner already described, so as to allow the formation of a connection device for coupling mechanically and electrically close together in a fluid-tight manner the two inflatable elements 1 and 9 arranged in series.

According to this aspect, the apparatus 100, 101 allows the activation of a plurality of inflatable elements 1, 9 arranged in series, in a modular configuration, by means of activation of a single gas generator 4, provided that all the mutual connections between the casing and the inflatable elements have been correctly performed, i.e. a flow of current has occurred inside the respective connection devices 10. The number of inflatable elements which may be arranged in series depends on the capacity of the gas generator, the desired pressure in the inflatable elements when inflated, and the volume of the latter.

The connection between the inflatable elements, as well as between the casing and one or more of the inflatable elements, is reversible, therefore the apparatus 100 may be personalized by means of the addition/removal of inflatable elements. In this case, any (one or more) outlet passages of the last inflatable element to which no further inflatable element must be coupled may be closed, ensuring the sealed condition, by means of respective cap elements which are suitably configured. Such a cap element may also comprise a respective connection component (or counter component) so as to form a coupled arrangement which prevents activation of the gas generator if not correctly performed, in the manner already described above.

As regards the control unit 7, this may be included in the inflatable element. In accordance with this configuration, the apparatus is particularly compact and no cables are arranged on the outside of the inflatable element 1 or the casing 3, as can be seen in Figure 6. Therefore, the apparatus does have electric cables or wires which are visible.

This increases the duration and the reliability of the apparatus, since the electrical connections are protected and not directly exposed to knocks and impacts. According to this configuration, when the electrical connection is established between the terminal portion 51 and the counter terminal portion 61, an electrical connection is also established between the control unit 7 and the gas generator 4 in a wired manner. Therefore, the control unit 7 cannot send the activation signal to the gas generator 4 when this electrical connection is interrupted.

Alternatively, the control unit 7 may be arranged on the outside of the inflatable element, as shown in Figures 8 and 9. In this case, cables external thereto are present, when the connection of the gas generator 4 with the control unit 7 is realized in wired mode, as in the apparatus 100 shown in Figure 8. These cables may be arranged extending from the respective connection component 5 on the outside of the inflatable element carrying it, by means of suitable holes or openings, as shown in Figure 8, which are configured to ensure the fluid-tightness of the connection element.

According to a further aspect of the present description, it can be noted that the apparatus 101 may comprise a control unit 7' configured to exchange data in wireless mode, as shown in Figure 9. The control unit 7' is configured to perform activation of the gas generator 4 in wireless mode. This does not exclude the simultaneous additional possibility of exchanging data in wired mode, as already described above. According to this configuration, together with the wireless activation of the gas generator 4, the transmission/reception of a corresponding verification signal to the connection component 5 is also envisaged, said signal confirming the flow of current between the connection component 5 and the counter connection component 6. If said verification signal is not received/detected, activation of the gas generator 4 is prevented.

The subject-matter of the present disclosure has been described hitherto with reference to its embodiments. It is to be understood that other embodiments relating to the same inventive idea may exist, all of these falling within the scope of protection of the claims which are attached below.

## Claims

1. Socket connection device (10) for connecting at least a first inflatable element (1) with a second inflatable element (9) and/or with a gas generator (4), wherein said socket connection device (10) comprises:
- a connection component (5) adapted to be connected to said first inflatable element (1),
- and a counter connection component (6) adapted to be connected to said second inflatable element (9) and/or with a gas generator (4),
said counter connection component (6) being adapted to be reversibly connected with said connection component (5) so as to define a tubular body extending between a first opening and a second opening and defining an internal cavity, wherein the connection component (5) of the tubular body defines said first opening and the counter connection component (6) of the tubular body defines said second opening, wherein said first connection component (5) comprises a first activation member (51) intended to determine a generation of an electrical signal, and wherein said counter connection component (6) comprises a second sensitive member (61) intended to cooperate or interact with said first activation member (51) in order to determine the generation of said electrical signal, wherein a connection condition of said connection component (5) and said counter connection component (6) corresponds to a sealed closure of said first opening with respect to said second opening, and an interaction between said first activation member (51) and said second sensitive member (61) with the generation of an electrical signal.

2. Socket connection device (10) according to claim 1, wherein said first activation member (51) is an electrical terminal, and said second sensitive member (61) is an electrical terminal intended to create a direct electrical contact with said first activation member (51) in the closed condition of said connection component (5) of the tubular body and said counter connection component (6) of the tubular body.

3. Socket connection device (10), wherein said first activation member (51) is a magnet and said second sensitive member (61) is a proximity switch device sensitive to a magnetic field of said magnet, intended to create said electrical signal in proximity to said magnet.

4. Socket connection device (10) according to one of the preceding claims, wherein said connection component (5) and counter connection component (6) are configured to achieve a direct mechanical connection, preferably of the quick-fit type or a male-female threaded connection.

5. Socket connection device (10) according to one of the preceding claims, wherein said first activation member (51) and said second sensitive member (61) are positioned at said first opening and said second opening so as to allow mutual interaction.

6. Socket connection device (10) according to one of the preceding claims, wherein said first activation member (51) and said second sensitive member (61) are incorporated in the socket connection device so as to determine an on/off electrical connection depending on the connection/disconnection of said first connection component (5) and said counter connection component (6), said on/off electrical connection not requiring an additional detection device.

7. Protective apparatus (100) which comprises a socket connection device (10) according to any one of the preceding claims, a first inflatable element (1) and both or either one of a second inflatable element (9) and a gas generator (4), wherein, in a closed condition of the connection component (5) with said counter connection component (6), said first activation member (51) is configured to generate a signal indicating a state where the gas is passing through and wherein, in a condition of non-closure of the connection component (5) with said counter connection component (6), said first activation member (51) is unable to generate any signal indicating a state where the gas is passing through.

8. Protective apparatus (100) according to claim 7, comprising said first inflatable element and wherein said connection component (5) is attached to said first inflatable element so as to allow gas to pass into said first inflatable element, wherein said first inflatable element (1) has a first gas passage (11, 92), said first passage (11, 92) being configured to connect the interior of said first inflatable element (1) with an area external thereto, wherein said connection component (5) is positioned at said first passage (11, 92) and attached to the first inflatable element (1).

9. Protective apparatus (100) according to claim 8, comprising said first inflatable element (1) with said connection component (5) and said second inflatable element (9), wherein said second inflatable element (9) has a respective second passage (13), said second passage (13) being configured to connect the interior of said second inflatable element (9) with an area external thereto, wherein said counter connection component (6) is positioned at said second passage (13) and attached to said second inflatable element (9).

10. Protective apparatus (100) according to claim 9, wherein said second inflatable element is a casing body (3) that serves as a container for the gas generator (4).

11. Protective apparatus (100) according to claim 9, comprising said first inflatable element (1) with said connection component (5) and said second inflatable element (9) with said counter connection component (6), wherein both said first inflatable element (1) and said second inflatable element (9) are inflatable elements serving to protect a user.

12. Protective apparatus (100) according to any one of claims 7 to 11, comprising an electric cable connected at least to said second sensitive member.

13. Apparatus (100) according to claim 12 in combination with claim 10 or 11, wherein said electric cable is a first cable (66) connected to said gas generator (4), and wherein, in a closed condition of the connection component (5) with said counter connection component (6), said first activation member (51) is configured to generate an active state of the gas generator (4) via said first cable, and wherein, in a condition of non-closure of the connection component (5) with said counter connection component (6), no flow of electric current is generated and no signal may be sent by the control unit to the gas generator.

14. Apparatus (100) according to claim 12, wherein said electric cable is a first cable (66) and said apparatus (100) comprises a second electric cable (55) connected to said first activation member (51) and configured to establish an electric current connection with said first cable respectively.

15. Apparatus (100) according to claim 14, wherein said second electric cable (55) is arranged within said first inflatable element (1).

16. Apparatus (100) according to any one of the preceding claims, comprising a control unit (7) configured for the activation of said gas generator (4).

17. Apparatus (100) according to claim 16, wherein said control unit (7) is housed within said first inflatable element (1) and/or said control unit (7) is configured to send a wireless activation signal to said gas generator (4).

18. Apparatus (100) according to one of the preceding claims, comprising a plurality of first inflatable elements (1).

19. Apparatus (100; 101; 102) according to one of claims 6 to 17, which is configured to be wearable, or is configured as a garment.

20. Garment which includes an apparatus (100) according to one of claims 7 to 19.

21. Method of activating an apparatus (100) according to one of claims 7 to 19, wherein the method includes the following steps:
- providing said first inflatable element (1) and both or either one of said second inflatable element (9) and said gas generator (4);
- mechanically connecting said connection component (5) with said counter connection component (6) so as to define said socket connection device (10) configured in such a way as to:
∘ create a fluid-tight duct adapted to allow the entry of a gas into said first inflatable element (1),
∘ allow the generation of a signal between the first activation member (51) of said connection component (5) and the second sensitive member (61) of said counter connection component (6),
∘ wherein the gas is released only if an interaction between the first activation member (51) of said connection component (5) and the second sensitive member (61) of said counter connection component (6) is detected.
